# FASCICULE DE BREVET EUROPEEN

(11) **EP 3 421 824 B1**
(45) Date de publication et mention de la délivrance du brevet: **08.12.2021**
(21) Numéro de dépôt: 18178198.0
(22) Date de dépôt: 18.06.2018
(51) Int. Cl.: F16B 45/02

(54) **MOUSQUETON SECURISE**
GESICHERTER KARABINERHAKEN
SECURE CARABINER

(30) Priorité: 26.06.2017 FR 1755849
(43) Date de publication de la demande: 02.01.2019
(73) Titulaire: Zedel, 38920 Crolles (FR)
(72) Inventeur: CHAUMONTET, Michael, 38920 Crolles (FR); JOURDAN, Marc, 38400 SAINT MARTIN D'HERES (FR)
(74) Mandataire: Talbot, Alexandre

(56) Documents cités:
- CH-A2- 706 384
- FR-A1- 2 319 047
- FR-A1- 2 967 076
- FR-A1- 3 030 284
- US-A- 1 622 971
- US-B1- 6 622 354

## Description

### Domaine technique de l'invention

L'invention est relative à un mousqueton dont le fonctionnement est amélioré et plus particulièrement à un mousqueton qui peut être installé en haut d'une voie d'escalade.

### État de la technique

De manière classique, un grimpeur monte une voie d'escalade en installant de multiples points d'assurage au fur et à mesure de sa progression. Lorsque le grimpeur arrive au sommet de la voie, il passe la corde dans un point d'assurage fixe. La personne qui assure le grimpeur fait glisser la corde à travers le mousqueton jusqu'à ce que le grimpeur atteigne le sol.

Dans les écoles d'escalade et surtout dans les salles d'escalade, le sommet de la voie est matérialisé par un mousqueton ou un autre élément d'assurage. Il est particulièrement avantageux d'utiliser un mousqueton car l'installation de la corde est simple à mettre en œuvre.

Cependant, l'utilisation d'un mousqueton pose quelques problèmes de sécurité. En effet, le mousqueton possède un doigt mobile qui permet l'insertion de la corde à l'intérieur de l'anneau défini par le mousqueton, mais la configuration générale de l'anneau ne permet pas d'empêcher que le brin de corde entre, de nouveau, dans le mousqueton ce qui se traduit par une désolidarisation de la corde avec le mousqueton.

Pour éviter ce désagrément, la société Edelrid commercialise un mousqueton qui est prévu pour équiper le sommet des voies d'escalade. Le mousqueton comporte une gorge mobile qui est configurée pour accepter l'insertion de la corde à l'intérieur du mousqueton puis pour bloquer une nouvelle insertion de la corde à l'intérieur du mousqueton si un brin de corde est déjà présent dans le mousqueton. Un tel produit est également divulgué dans le document DE102014007993A1.

Il apparait que l'utilisation d'un tel produit n'est pas satisfaisante car la corde peut toujours sortir du mousqueton en cas de mauvaise manipulation.

Un autre mode de réalisation sensiblement identique est divulgué dans le document CH706384 qui propose un mousqueton avec un élément bloqueur qui assure la sécurisation de la corde en deux étapes successives. La corde appuie sur un doigt qui actionne la fermeture d'une fente d'accès à l'intérieur du mousqueton. Le déplacement de la corde se poursuit à l'intérieur du mousqueton jusqu'à atteindre une zone de rétention où la corde est coincée et ne peut plus revenir vers la fente d'accès. Pour obtenir ce blocage, le système de blocage est formé au moyen d'un élément de forme spécifique qui coopère avec une rampe de la fente d'accès. Là encore, il apparaît que ce mode de réalisation n'est pas aussi performant qu'attendu car la forme du système de blocage est lié à la forme de rampe et au diamètre de la corde ce qui rend le mousqueton particulièrement difficile à réaliser de manière industrielle.

La réalisation d'un mousqueton limitant l'introduction d'un deuxième brin de corde est également connue du document CH699865 qui propose d'utiliser une roue à cliquet agencée pour tourner dans un seul sens. Il s'avère qu'un tel mode de réalisation est particulièrement difficile à mettre en œuvre et peu performant. En effet, si un deuxième brin de corde entre dans la fente, et appuie sur la roue à cliquet cela va se traduire par le coincement du premier brin de corde. Lors du coulissement, le premier brin de corde sera détérioré.

Encore un autre mousqueton est connu de US 6 622 354 B1.

### Objet de l'invention

Un objet de l'invention a pour but de remédier à ces inconvénients en proposant un mousqueton selon la revendication 1 qui permet un maintien amélioré de la corde à l'intérieur du mousqueton tout en assurant une insertion aisée dans le mousqueton.

A cet effet, le mousqueton comporte :
- un corps définissant une fente d'introduction d'une corde prolongée par une zone de rétention de la corde,
- un premier bloqueur monté mobile entre une position d'attente de la corde dans la fente d'introduction et une position d'obturation lorsque la corde se trouve dans la zone de rétention, la position d'obturation étant configurée pour interdire l'introduction d'une autre corde dans la zone de rétention,
- un deuxième bloqueur configuré pour autoriser un déplacement de la corde depuis la fente d'introduction jusqu'à la zone de rétention et interdire un déplacement de la corde depuis la zone de rétention vers la fente d'introduction.

Le mousqueton est remarquable en ce que le deuxième bloqueur est un bloqueur mobile configuré pour se déplacer entre une position d'attente fermant la zone de rétention et une position d'introduction de la corde dans la zone de rétention.

Dans un développement, le mousqueton comporte un premier ressort configuré pour placer le premier bloqueur dans la position d'attente lorsque la zone de rétention est dépourvue de corde.

Le premier bloqueur comporte un premier doigt séparant la fente d'introduction et la zone de rétention de sorte que la corde entraine le premier doigt d'une position d'attente jusqu'à une position de rétention lorsque la corde se déplace depuis la fente d'introduction jusqu'à la zone de rétention.

Avantageusement, le premier bloqueur comporte un obstacle solidaire du premier doigt et monté mobile de sorte que le déplacement du premier doigt vers la zone de rétention entraine l'obturation de la fente d'introduction par l'obstacle.

Il est avantageux de prévoir que le premier bloqueur soit monté mobile en rotation.

Il est également possible de prévoir que le mousqueton comporte un deuxième ressort configuré pour placer le deuxième bloqueur dans la position d'attente.

Dans un autre mode de réalisation, le deuxième bloqueur est configuré pour obstruer la fente d'introduction lorsque le deuxième bloqueur se trouve dans la position d'introduction de la corde dans la zone de rétention.

Dans un autre développement, le deuxième bloqueur comporte un deuxième doigt mobile séparant la fente d'introduction et la zone de rétention de sorte que la corde entraine le deuxième doigt d'une position d'attente jusqu'à la position d'introduction lorsque la corde se déplace depuis la fente d'introduction jusqu'à la zone de rétention.

Préférentiellement, le deuxième bloqueur comporte un obstacle solidaire du deuxième doigt et monté mobile de sorte que le déplacement du deuxième doigt vers la zone de rétention entraine l'obturation de la fente d'introduction par l'obstacle.

Dans un mode de réalisation préférentiel, le premier bloqueur et le deuxième bloqueur sont montés mobiles en rotation autour d'un même axe de rotation.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :
- la figure 1 illustre, de façon schématique, deux vues latérales opposées des deux faces opposées d'un mode de réalisation d'un mousqueton lorsque la corde est dans la fente d'insertion,
- la figure 2 illustre, de façon schématique, deux vues latérales opposées des deux faces opposées d'un mode de réalisation d'un mousqueton lorsque la corde passe de la fente d'insertion à la zone de rétention,
- la figure 3 illustre, de façon schématique, deux vues latérales opposées des deux faces opposées d'un mode de réalisation d'un mousqueton lorsque la corde est installée dans la zone de rétention,
- la figure 4 illustre, de manière schématique, une vue en perspective d'un mousqueton selon l'invention,
- la figure 5 représente une vue éclatée d'un mousqueton selon l'invention,
- les figures 6A et 6B représentent, de manière schématique, une coupe d'un mousqueton selon le plan A-A et une vue de face d'un mousqueton.

### Description détaillée

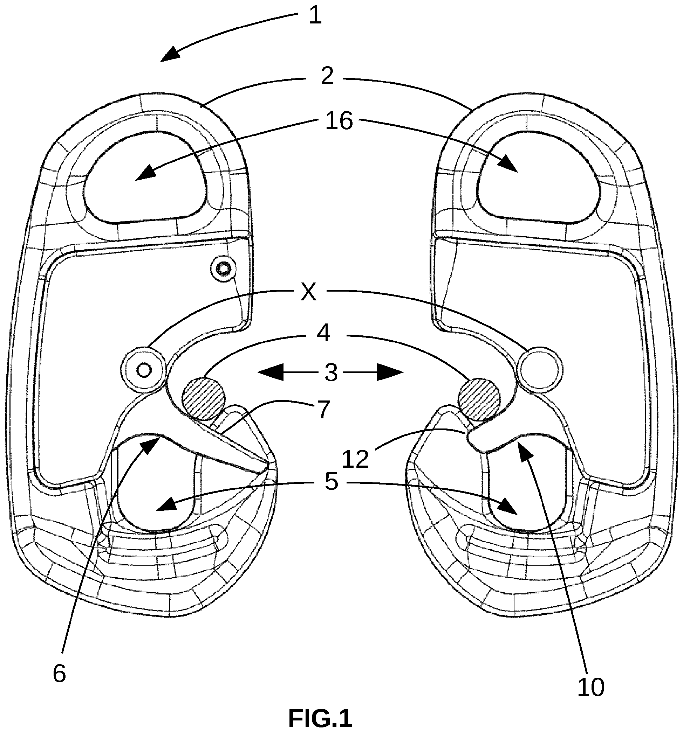

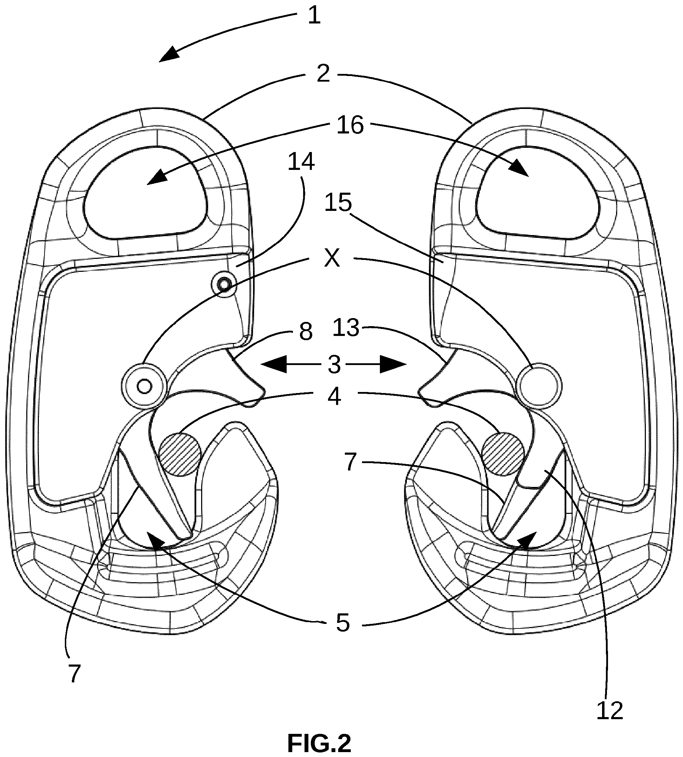

Les figures 1, 2 et 3 représentent des vues latérales opposées d'un mousqueton 1 à différentes étapes de l'insertion d'une corde pour les deux faces latérales opposées du mousqueton 1.

Le mousqueton 1 comporte un corps 2 qui définit une fente 3 d'introduction d'une corde 4 et la fente 3 est prolongée par une zone de rétention 5 de la corde 4 à l'intérieur du corps 2. Le corps 2 peut avoir une forme quelconque. Le corps 2 définit une rainure de manière à former la fente 3 d'introduction et la zone de rétention 5. De cette manière, une fois que la corde 4 est installée dans la zone de rétention 5, elle reste dans la rainure tout en pouvant coulisser afin de permettre la descente du grimpeur.

Le corps 2 peut être formé par tout matériau adapté. De manière avantageuse, le corps 2 est réalisé en matériau métallique. Selon les modes de réalisation, le corps 2 peut être formé par une seule pièce où par un ensemble d'éléments fixés les uns aux autres.

Comme illustré aux figures 1 à 3, la corde 4 est introduite à l'intérieur du corps 2 en passant par la fente 3 d'introduction puis en se déplaçant à l'intérieur du corps 2 pour atteindre la zone de rétention 5.

Pour éviter qu'un deuxième brin de la corde 4 puisse entrer également dans la zone de rétention 5 et ainsi autoriser une désolidarisation de la corde 4 avec le mousqueton 1, il est prévu d'utiliser un premier bloqueur 6.

Le premier bloqueur 6 est monté mobile entre une position d'attente de la corde 4 et une position d'obturation. Dans la position d'attente, le premier bloqueur 6 est configuré pour attendre la corde 4 dans la fente 3 d'introduction. Dans la position d'obturation, le premier bloqueur 6 est configuré pour interdire l'introduction d'une autre corde 4 et d'une manière générale de tout autre élément dans la zone de rétention 5 à partir de la fente 3 d'introduction. Dans la position d'obturation, le premier bloqueur 6 est configuré pour obturer la fente 3.

Le premier bloqueur 6 est configuré pour se trouver dans la position d'attente lorsque la zone de rétention 5 est dépourvue de corde 4. Le premier bloqueur 6 est configuré pour se trouver dans la position d'obturation lorsque la zone de rétention 5 contient une corde 4.

Comme cela est illustré aux figures 1 à 3, le premier bloqueur 6 se trouve initialement en position d'attente lorsque la corde 4 entre dans la fente 3 d'introduction. Puis, la corde 4 se déplace pour atteindre la zone de rétention 5. Lors de ce déplacement, le premier bloqueur 6 vient refermer la fente 3 par exemple au moyen d'un obstacle 8 qui vient fermer au moins partiellement la fente 3.

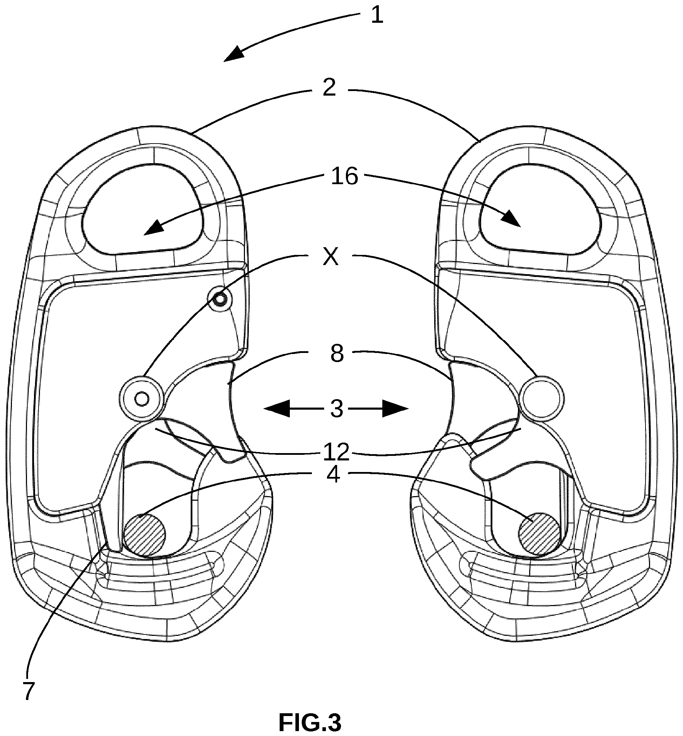

Le premier bloqueur 6 comporte un premier doigt 7 qui est monté mobile. Le premier doigt 7 sépare la fente 3 d'introduction et la zone de rétention 5 de sorte que la corde 4 entraine le premier doigt 7 depuis une position d'attente jusqu'à une position de rétention lorsque la corde 4 se déplace depuis la fente 3 d'introduction jusqu'à la zone de rétention 5. Comme cela est illustré aux figures 1 et 3, le premier doigt 7 reste en contact de la corde tout au long de son cheminement dans la rainure jusqu'à atteindre la zone de rétention 5. De manière avantageuse, le premier doigt 7 reste en contact avec la corde quand la corde est dans la zone de rétention 5.

De manière particulièrement avantageuse, la corde 4 se déplace le long du premier doigt 7 lors de son cheminement dans la rainure pour éviter la formation de points d'usure sur le premier doigt.

Le premier bloqueur 6 comporte avantageusement un obstacle 8 mobile qui se déplace entre une position d'attente et une position d'obturation. Dans la position d'attente, la fente 3 d'introduction est libre de manière à autoriser l'introduction d'une corde. Dans la position d'obturation, l'obstacle 8 vient obstruer partiellement ou totalement la fente 3 de manière à empêcher l'introduction d'une corde ou d'un autre élément.

Dans le mode de réalisation illustré, le premier bloqueur 6 comporte un premier obstacle 8 solidaire du premier doigt 7. Le premier obstacle 8 est monté mobile de sorte que le déplacement du premier doigt 7 vers la zone de rétention 5 entraine l'obturation de la fente 3 d'introduction par le premier obstacle 8.

Préférentiellement, le premier obstacle 8 est formé par un doigt additionnel distinct du premier doigt 7. Le premier bloqueur 6 définit une rainure dont les parois latérales forment au moins en partie le premier doigt 7 et le doigt additionnel. De cette manière, la corde 4 est introduite dans la fente 3 et arrive contre le fond de la rainure définie par le premier bloqueur 6 pour venir appuyer sur le premier doigt 7 lors de la descente vers la zone de rétention 5.

Dans un mode de réalisation particulièrement avantageux, le premier doigt 7 est fixé au doigt additionnel. De cette manière, l'entraînement du premier doigt 7 au moyen de la corde 4 entraîne automatiquement l'entraînement du doigt additionnel qui va venir refermer la fente 3 d'introduction. Dans le mode de réalisation illustré, le premier doigt 7 et l'obstacle 8 sont monobloc ce qui permet de réaliser un premier bloqueur 6 compact et efficace.

Dans le mode de réalisation illustrée, le premier bloqueur 6 est monté mobile en rotation autour d'un axe X. Cependant, dans une alternative de réalisation, il est également possible de prévoir que le premier bloqueur 6 soit monté mobile en translation ou selon un autre mouvement.

Il est particulièrement avantageux de prévoir que le premier doigt 7 entraine l'actionnement de l'obstacle 8 car cela permet d'actionner l'obstacle plus tôt dans le processus d'insertion de la corde 4. Il est particulièrement avantageux de prévoir que le premier doigt 7 possède une position d'attente dans la fente 3 d'introduction et non dans la zone de rétention 5 car les risques d'introduction de deux brins de corde 4 de manière quasi-simultané sont réduits. De cette manière, il peut exister une plus grande liberté dans le diamètre de la corde qui peut être utilisé ou dans la largeur de la rainure et dans la forme de la rainure. Dans l'exemple illustré, la rainure est une rainure simple, c'est-à-dire une rainure dont les parois latérales sont dépourvue de retour et renfoncement pour bloquer la corde et empêcher une sortie hors de la rainure.

De manière avantageuse, le premier bloqueur 6 est associé à un premier ressort 9 qui prend appui sur le corps 2 et qui est configuré pour placer le premier bloqueur 6 dans la position d'attente. En d'autres termes, le premier ressort 9 est configuré pour que le premier bloqueur 6 soit en position d'attente lorsque que la zone de rétention 5 est dépourvue de corde 4.

De manière préférentielle, le premier doigt 7 du premier bloqueur 6 est agencé pour rester en contact de la corde 4 depuis son introduction dans la fente 3 d'introduction et jusqu'à son placement dans la zone de rétention 5. Lorsque la corde 4 est mise sous tension, elle s'oppose à la force de rappel introduite par le premier ressort 9. Ainsi, le premier bloqueur 6 se trouve en position d'obturation tant que la corde 4 se trouve dans la zone de rétention 5.

De manière avantageuse, le corps 2 définit une première butée de blocage dans le mouvement du premier bloqueur 6 lorsque ce dernier se trouve en position d'obturation. Cette sécurité additionnelle permet d'assurer que l'obstacle empêchant l'introduction d'un nouvel élément dans la zone de rétention 5 ne puisse être forcé. En alternative, la butée de blocage peut être formée par un carter fixé au corps 2.

Il est également avantageux de prévoir que le corps 2 définit une deuxième butée de blocage dans le mouvement du premier bloqueur 6 afin de définir la position d'attente. Dans cette configuration, l'obstacle 8 peut venir en contact du corps 2 ou du carter qui s'oppose à la force de rappel introduite par le premier ressort 9.

Cette configuration est particulièrement avantageuse lorsque le premier bloqueur 6 est monté mobile en rotation car il est possible de réaliser facilement et de manière compacte le premier bloqueur 6 et les première et deuxième butées qui définissent l'amplitude d'actionnement du premier bloqueur 6.

De manière particulièrement avantageuse, l'obstacle 8 utilisé pour refermer la fente 3 d'introduction est agencé pour que la face du mousqueton 1 définissant la fente 3 d'introduction soit dépourvue de zone saillante apte à accrocher une corde 4 dans la position d'obturation. Dans l'exemple illustré, l'obstacle 8 est agencé pour former une surface qui rejoint les deux extrémités opposées de la fente 3 sur le pourtour du mousqueton 1.

Le mousqueton 1 comporte également un deuxième bloqueur 10. Le deuxième bloqueur 10 est configuré pour autoriser un déplacement de la corde 4 depuis la fente 3 d'introduction jusqu'à la zone de rétention 5. Le deuxième bloqueur 10 est également configuré pour interdire le déplacement de la corde 4 depuis la zone de rétention 5 vers la fente 3 d'introduction.

En d'autres termes, le deuxième bloqueur 10 est configuré pour autoriser le déplacement de la corde 4 à l'intérieur du mousqueton dans une seule direction. De cette manière, il est impossible à la corde 4 d'effectuer le trajet en sens inverse pour ressortir du mousqueton 1.

De manière avantageuse, le deuxième bloqueur 10 est configuré pour empêcher la sortie de la corde 4 avant que la corde 4 atteigne la zone de rétention.
5

Le premier bloqueur 6 est distinct du deuxième bloqueur 10 de manière à faciliter la réalisation des deux fonctions c'est-à-dire dissocier l'obturation de la fente 3 d'introduction et la sortie de la corde à travers la fente 3 depuis la zone de rétention 5.

Là encore, il est particulièrement avantageux d'utiliser un deuxième bloqueur 10 qui est un bloqueur mobile. Selon les modes de réalisation, le deuxième bloqueur 10 peut être monté mobile en rotation, en translation, ou selon une autre forme de déplacement. Le mode de déplacement du premier bloqueur 6 peut être différent du mode de déplacement du deuxième bloqueur 10.

Dans le mode de réalisation illustré, le premier bloqueur 6 et le deuxième bloqueur 10 sont tous les deux montés mobiles en rotation. De manière particulièrement avantageuse, les deux bloqueurs 6 et 10 sont montés mobiles en rotation autour du même axe de rotation X ce qui permet de faciliter l'assemblage et la maintenance du dispositif. Cependant il est également possible d'utiliser des axes de rotation différents entre le premier bloqueur 6 et le deuxième bloqueur 10.

Dans un mode de réalisation avantageux car facile à réaliser, le deuxième bloqueur 10 est configuré pour présenter une position d'attente dans laquelle le deuxième bloqueur 10 sépare la zone de rétention 5 et la fente 3 d'introduction. Le deuxième bloqueur 10 est également configuré pour présenter une position d'introduction dans laquelle le deuxième bloqueur 10 autorise le passage d'une corde entre la fente 3 d'introduction et la zone de rétention 5.

Dans un mode de réalisation préférentiel, le deuxième bloqueur 10 est associé à un deuxième ressort 11. Le deuxième ressort 11 est configuré pour placer le deuxième bloqueur 10 dans la position d'attente en l'absence de sollicitation.

Il est avantageux de prévoir que le deuxième bloqueur 10 revient vers sa position d'attente indépendamment de la présence ou non d'une corde 4 à l'intérieur de la zone de rétention 5.

Dans un mode de réalisation particulier, le deuxième bloqueur 10 présente un deuxième doigt 12 qui est configuré pour séparer la fente 3 d'introduction et la zone de rétention 5. Le deuxième doigt 12 suit le déplacement de la corde 4 jusqu'à la position d'introduction dans la zone de rétention 5. À ce moment, la corde 4 s'échappe du deuxième doigt 12 et le deuxième bloqueur 10 revient dans la position d'attente au moyen du deuxième ressort 11. Avantageusement, le deuxième bloqueur 10 vient en butée contre le corps 2.

De cette manière, le deuxième doigt 12 vient refermer la zone de rétention 5 c'est-à-dire définir un anneau fermé ou quasi fermé de manière à empêcher la sortie de la corde 4 depuis la zone de rétention 5. Ainsi, le premier doigt 7 ne peut retrouver sa position d'attente et la fente 3 est obstruée.

Les différents modes de réalisation illustrés présentent un deuxième bloqueur 10 qui est pourvu d'un doigt unique pour fermer la zone de rétention 5. Cependant, dans un mode de réalisation non illustré, il est possible de fermer la zone de rétention 5 avec au moins deux éléments qui sont montés mobiles et qui viennent empêcher la ressortie de la corde 4 depuis la zone de rétention 5, par exemple deux doigts opposés installés sur les deux parois latérales opposées de la rainure.

Selon les modes de réalisation, les deux éléments peuvent être configurés pour se déplacer indépendamment l'un de l'autre ou alors le déplacement d'un des éléments impose le déplacement de l'autre élément.

Là encore, il est avantageux de prévoir que le corps 2 forme une butée de blocage au déplacement du doigt du deuxième bloqueur 10 lorsque ce dernier est soumis à une force qui essaie d'ouvrir le bloqueur à partir de la zone de rétention 5.

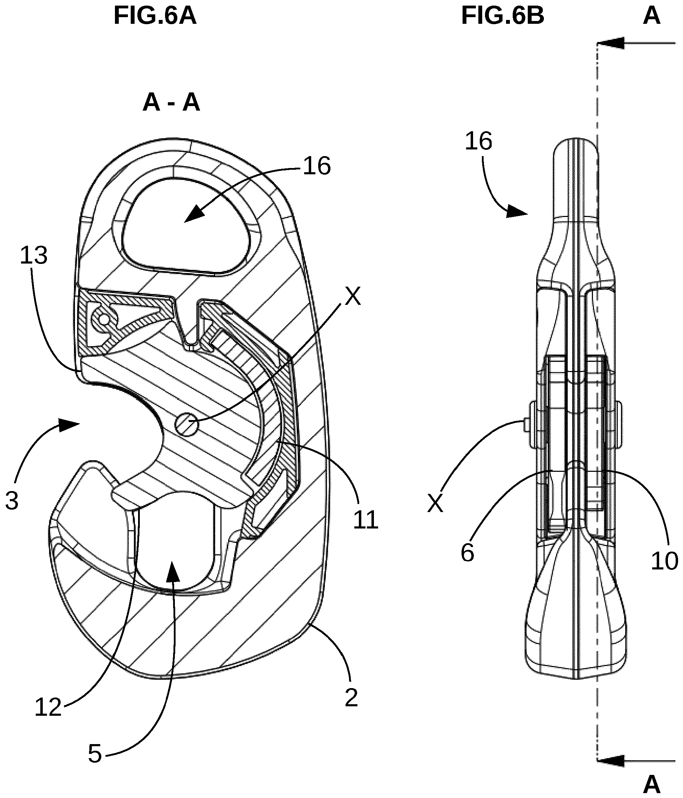

Dans un mode de réalisation particulièrement avantageux et illustré à la figure 6a, le deuxième bloqueur 10 est muni d'un obstacle 13 qui est configuré pour empêcher l'introduction d'un élément dans la zone de rétention 5 lorsque le deuxième bloqueur 10 se trouve dans la position ouverte, c'est-à-dire dans la position qui autorise une communication entre la fente 3 d'introduction et la zone de rétention 5.

Cet obstacle 13 permet à l'utilisateur qui arrive en haut d'une voie de détecter un mauvais fonctionnement du deuxième bloqueur 10. En effet, le deuxième ressort 11 est configuré pour ramener le deuxième bloqueur 10 dans la position d'attente. Lorsque le deuxième ressort 11 est défaillant, par exemple cassé, ce dernier ne revient plus dans la position d'attente et il empêche l'introduction de la corde 4. L'utilisateur sait immédiatement que le ressort ne va pas replacer le doigt 12 dans la position d'attente qui referme la zone de rétention 5. L'utilisateur peut alors placer manuellement le deuxième bloqueur 10 dans la position d'attente, introduire la corde 4 et placer le deuxième bloqueur 10 en position d'attente pour empêcher une sortie de la corde 4 hors du mousqueton. La descente de l'utilisateur est assurée en toute sécurité et une intervention de maintenance sera réalisée sur le mousqueton 1 défaillant.

Il est particulièrement avantageux de prévoir que le deuxième bloqueur 10 soit configuré pour refermer au moins partiellement la fente 3 d'introduction. De cette manière, le risque de sortie de la corde 4 hors de la zone de rétention 5 est réduit. Cette configuration permet de sécuriser le maintien de la corde 4 indépendamment du diamètre de la corde 4.

Dans le mode de réalisation illustré, le premier bloqueur 6 est séparé du deuxième bloqueur 10 par le corps 2 selon un axe X qui peut être l'axe de rotation du premier bloqueur 6 et ou du deuxième bloqueur 10. L'axe peut également être un axe perpendiculaire au plan de glissement du premier bloqueur 6 ou du deuxième bloqueur 10.

Dans le mode de réalisation illustré, le premier bloqueur 6 et le deuxième bloqueur 10 sont disposés du même coté de l'ouverture définie à l'intérieur du corps 2. En d'autres termes, le corps 2 définit une fente 3 qui possède un fond et deux parois latérales opposées et les deux bloqueurs 6 et 10 sont fixés sur la même paroi latérale.

Dans une alternative de réalisation, le premier bloqueur 6 est fixé sur une première paroi latérale et le deuxième bloqueur 10 est fixé sur l'autre paroi latérale de sorte que lors du cheminement de la corde 4, les deux points de fixation des bloqueurs 6 et 10 sont séparés par la corde 4.

Bien entendu, il est également possible de fixer un des bloqueurs ou les deux bloqueurs sur la paroi qui forme le fond de la fente 3.

Si le premier bloqueur 6 et/ou le deuxième bloqueur 10 sont formés par plusieurs doigts, il est également possible de prévoir des points de fixation du premier bloqueur 6 et/ou du deuxième bloqueur 10 soient sur les deux parois latérales opposées.

Comme illustré à la figure 6, il est particulièrement avantageux d'utiliser un premier ressort 9 et un deuxième ressort 11 qui sont séparés par le corps 2 selon le même axe qui sépare le premier bloqueur 6 et le deuxième bloqueur 10.

Il est également avantageux de prévoir que le premier bloqueur 6 soit installé dans un premier carter 14 qui est fixé au corps 2. Le premier carter 14 définit une butée d'appui pour une extrémité du premier ressort 9. L'autre extrémité du premier ressort 9 appuie sur le premier bloqueur 6. En alternative, l'extrémité du premier ressort 9 peut venir en appui sur le corps 2.

Il est également avantageux de prévoir que le deuxième bloqueur 10 soit installé dans un deuxième carter 15 qui est fixé au corps 2. Le deuxième carter 15 définit une butée d'appui pour une extrémité du deuxième ressort 11. L'autre extrémité du deuxième ressort 11 appuie sur le deuxième bloqueur 10. En alternative, l'extrémité du deuxième ressort 11 peut venir en appui sur le corps 2.

Le premier et/ou le deuxième carters 14 et 15 peuvent être formés par un élément métallique, par exemple une tôle en acier, une tôle en fer ou une tôle en aluminium.

Le premier bloqueur 6 et/ou le deuxième bloqueur 10 peuvent être formés par un élément métallique, par exemple une tôle en acier, une tôle en fer ou une tôle en aluminium. De manière avantageuse, le corps 2 est totalement ou partiellement en acier.

Le mousqueton comporte un moyen de fixation qui permet de fixer le mousqueton à un autre élément, par exemple un point fixe qui se trouve au sommet d'une voie d'escalade.

Dans l'exemple illustré, le moyen de fixation est formé par un trou 16, mais il est également possible d'utiliser un élément en saillie, par exemple une vis, un écrou ou tout au élément d'accouplement avec le point fixe.

De manière avantageuse, le corps présente une épaisseur plus importante à proximité de la zone de rétention 5 dans les zones destinées à venir en contact avec la corde 4 lorsque l'utilisateur est soutenu à une extrémité de la corde. Dans le mode de réalisation illustré, le mousqueton possède deux surépaisseurs 17a et 17b disposées sur les deux faces opposées du corps 2.

Il est particulièrement avantageux de prévoir que le premier doigt 7 soit décalé latéralement par rapport à la corde 4 lorsque la corde se trouve dans la zone de rétention 5. Dans le mode de réalisation illustré, le premier doigt 7 est orienté de manière sensiblement vertical de sorte que l'appui provoqué par la corde 4 soit limité. De cette manière, le coulissement de la corde 4 lors de la redescente de l'utilisateur n'entraine pas la déformation du doigt 7. Il est alors possible d'utiliser un doigt 7 plus fin que ce qui est utilisé dans l'art antérieur et qui supporte la corde 4 lors de son coulissement.

Dans cette configuration, le deuxième bloqueur 10 est dissocié de la corde lors de son coulissement ce qui évite de former une zone de frottement préjudiciable. L'obstacle 8 empêche également une corde additionnelle d'actionner le doigt 12 qui peut empêcher d'introduire une nouvelle corde dans la zone de rétention mais qui appuie sur la corde 4 ce qui est également préjudiciable.

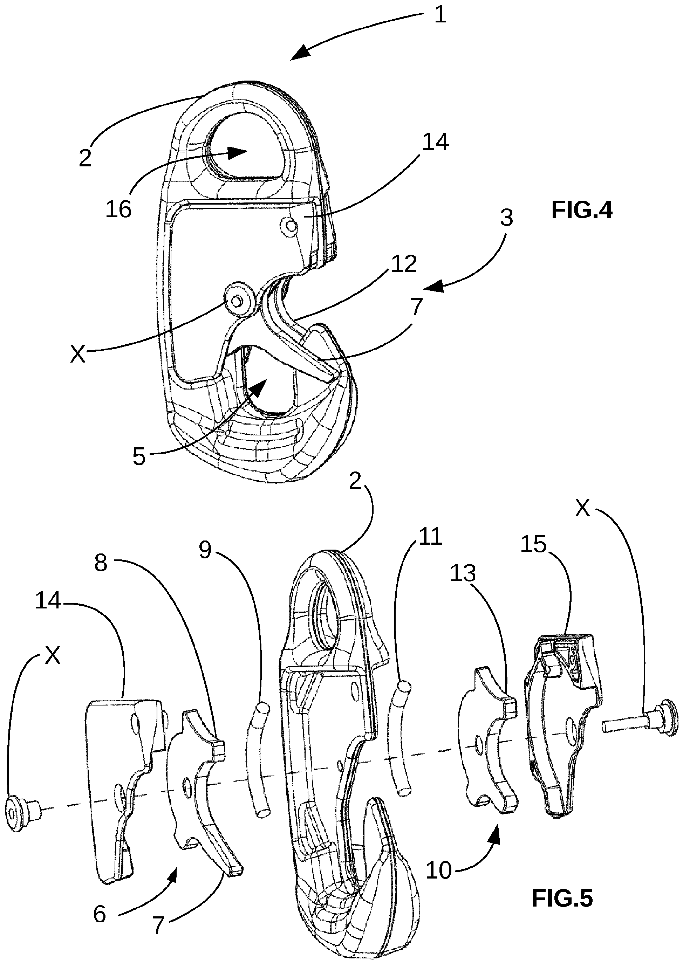

Dans les modes de réalisation illustrés, les deux bloqueurs 6 et 10 sont séparés par le corps 2. Dans une alternative de réalisation, les deux bloqueurs 6 et 10 peuvent être formés d'un seul côté du corps ou ils peuvent être formés à l'intérieur du corps 2, c'est-à-dire que les deux carters 14 et 15 représentés sur la figure 5 sont formés par le corps 2 et la partie centrale du corps peut être absente.

De manière préférentielle, le mouvement de l'obstacle 8 entre la position d'obturation et la position d'attente est différent du mouvement d'introduction de la corde de sorte que la force d'introduction de la corde dans la fente ne force pas le retour du bloqueur dans la position d'attente. Cette configuration permet l'utilisation d'un premier doigt 7 et/ou un deuxième doigt 12 qui présentent une surface de contact plane avec la corde 4. Il est également possible d'utiliser une rainure avec des parois latérales planes ce qui facilite la réalisation du mousqueton.

En séparant le blocage de la corde 4 dans la zone de rétention et l'obturation de la fente 3, le mousqueton résiste mieux dans le temps. Le premier bloqueur 6 n'est soumis à aucun effort provenant de la zone de rétention et il n'a pas besoin d'être configuré pour supporter des contraintes antagonistes provenant de la corde 4 cherchant à sortir de la zone de rétention, ni d'un autre brin de corde cherchant à rentrer dans la fente 3.

## Revendications

1. Mousqueton (1) comportant :
• un corps (2) définissant une fente (3) d'introduction d'une corde (4) prolongée par une zone de rétention (5) de la corde (4),
• un premier bloqueur (6) monté mobile entre une position d'attente de la corde (4) dans la fente (3) d'introduction et une position d'obturation lorsque la corde (4) se trouve dans la zone de rétention (5), la position d'obturation étant configurée pour interdire l'introduction d'une autre corde (4) dans la zone de rétention (5),
• un deuxième bloqueur (10) configuré pour autoriser un déplacement de la corde (4) depuis la fente (3) d'introduction jusqu'à la zone de rétention (5) et interdire un déplacement de la corde (4) depuis la zone de rétention (5) vers la fente (3) d'introduction, le premier bloqueur (6) étant distinct du deuxième bloqueur (10), le deuxième bloqueur (10) étant un bloqueur mobile configuré pour se déplacer entre une position d'attente fermant la zone de rétention (5) et une position d'introduction de la corde (4) dans la zone de rétention (5),
**caractérisé en ce que** le premier bloqueur (6) comporte un premier doigt (7) séparant la fente (3) d'introduction et la zone de rétention (5) de sorte que la corde (4) entraine le premier doigt d'une position d'attente jusqu'à une position de rétention lorsque la corde (4) se déplace depuis la fente (3) d'introduction jusqu'à la zone de rétention (5)

2. Mousqueton (1) selon la revendication 1, comportant un premier ressort (9) configuré pour placer le premier bloqueur (6) dans la position d'attente lorsque la zone de rétention (5) est dépourvue de corde (4).

3. Mousqueton (1) selon l'une des revendications 1 et 2, dans lequel le premier bloqueur (6) comporte un obstacle (8) solidaire du premier doigt (7) et monté mobile de sorte que le déplacement du premier doigt (7) vers la zone de rétention (5) entraine l'obturation de la fente (3) d'introduction par l'obstacle (8).

4. Mousqueton (1) selon l'une quelconque des revendications précédentes, dans lequel le premier bloqueur (6) est monté mobile en rotation.

5. Mousqueton (1) selon l'une des revendications précédentes, comportant un deuxième ressort (11) configuré pour placer le deuxième bloqueur (10) dans la position d'attente.

6. Mousqueton (1) selon la revendication précédente, dans lequel le deuxième bloqueur (10) est configuré pour obstruer la fente (3) d'introduction lorsque le deuxième bloqueur (10) se trouve dans la position d'introduction de la corde (4) dans la zone de rétention (5).

7. Mousqueton (1) selon la revendication précédente, dans lequel le deuxième bloqueur (10) comporte un deuxième doigt (12) mobile séparant la fente (3) d'introduction et la zone de rétention (5) de sorte que la corde (4) entraine le deuxième doigt (12) d'une position d'attente jusqu'à la position d'introduction lorsque la corde (4) se déplace depuis la fente (3) d'introduction jusqu'à la zone de rétention (5).

8. Mousqueton (1) selon la revendication précédente, dans lequel le deuxième bloqueur (10) comporte un deuxième obstacle (13) solidaire du deuxième doigt (12) et monté mobile de sorte que le déplacement du deuxième doigt (12) vers la zone de rétention (5) entraine l'obturation de la fente (3) d'introduction par le deuxième obstacle (13).

9. Mousqueton (1) selon l'une quelconque des revendications précédentes, dans lequel le premier bloqueur (6) et le deuxième bloqueur (10) sont montés mobiles en rotation autour d'un même axe de rotation (X).

## Patentansprüche

1. Karabiner (1), umfassend:
• einen Körper (2), der einen Schlitz (3) zum Einführen eines Seils (4) definiert, der durch eine Haltezone (5) des Seils (4) verlängert ist,
• eine erste Klemmvorrichtung (6), die zwischen einer Warteposition des Seils (4) in dem Einführschlitz (3) und einer Verschlussposition, wenn sich das Seil (4) in der Haltezone (5) befindet, beweglich montiert ist, wobei die Verschlussposition eingerichtet ist, um die Einführung eines weiteren Seils (4) in die Haltezone (5) zu verhindern,
• eine zweite Klemmvorrichtung (10), die eingerichtet ist, um eine Verlagerung des Seils (4) vom Einführschlitz (3) in die Haltezone (5) zu gestatten und eine Verlagerung des Seils (4) von der Haltezone (5) zum Einführschlitz (3) zu verhindern, wobei sich die erste Klemmvorrichtung (6) von der zweiten Klemmvorrichtung (10) unterscheidet, wobei die zweite Klemmvorrichtung (10) eine bewegliche Klemmvorrichtung ist, die eingerichtet ist, um sich zwischen einer Warteposition, die die Haltezone (5) verschließt, und einer Einführposition des Seils (4) in die Haltezone (5) zu verlagern,
**dadurch gekennzeichnet, dass** die erste Klemmvorrichtung (6) einen ersten Finger (7) umfasst, der den Einführschlitz (3) und die Haltezone (5) trennt, so dass das Seil (4) den ersten Finger von einer Warteposition in eine Halteposition mitnimmt, wenn sich das Seil (4) von dem Einführschlitz (3) in die Haltezone (5) verlagert.

2. Karabiner (1) nach Anspruch 1, umfassend eine erste Feder (9), die eingerichtet ist, um die erste Klemmvorrichtung (6) in die Warteposition zu bringen, wenn die Haltezone (5) ohne Seil (4) ist.

3. Karabiner (1) nach einem der Ansprüche 1 und 2, bei dem die erste Klemmvorrichtung (6) ein mit dem ersten Finger (7) verbundenes und beweglich montiertes Hindernis (8) umfasst, so dass die Verlagerung des ersten Fingers (7) in die Haltezone (5) zum Verschluss des Einführschlitzes (3) durch das Hindernis (8) führt.

4. Karabiner (1) nach einem der vorhergehenden Ansprüche, bei dem die erste Klemmvorrichtung (6) drehbeweglich montiert ist.

5. Karabiner (1) nach einem der vorhergehenden Ansprüche, umfassend eine zweite Feder (11), die eingerichtet ist, um die zweite Klemmvorrichtung (10) in die Warteposition zu bringen.

6. Karabiner (1) nach dem vorhergehenden Anspruch, bei dem die zweite Klemmvorrichtung (10) eingerichtet ist, um den Einführschlitz (3) zu verschließen, wenn sich die zweite Klemmvorrichtung (10) in der Einführposition des Seils (4) in die Haltezone (5) befindet.

7. Karabiner (1) nach dem vorhergehenden Anspruch, bei dem die zweite Klemmvorrichtung (10) einen zweiten beweglichen Finger (12) umfasst, der den Einführschlitz (3) und die Haltezone (5) trennt, so dass das Seil (4) den zweiten Finger (12) von einer Warteposition in die Einführposition mitnimmt, wenn sich das Seil (4) vom Einführschlitz (3) in die Haltezone (5) verlagert.

8. Karabiner (1) nach dem vorhergehenden Anspruch, bei dem die zweite Klemmvorrichtung (10) ein zweites mit dem zweiten Finger (12) verbundenes und beweglich montiertes Hindernis (13) umfasst, so dass die Verlagerung des zweiten Fingers (12) in die Haltezone (5) zum Verschluss des Einführschlitzes (3) durch das zweite Hindernis (13) führt.

9. Karabiner (1) nach einem der vorhergehenden Ansprüche, bei dem die erste Klemmvorrichtung (6) und die zweite Klemmvorrichtung (10) um dieselbe Drehachse (X) drehbeweglich montiert sind.

## Claims

1. Carabiner (1) comprising:
• a body (2) defining an insertion slot (3) of a rope (4) extended by a securing area (5) of the rope (4),
• a first clamp (6) fitted movable between a standby position of the rope (4) in the insertion slot (3) and an obstruction position when the rope (4) is located in the securing area (5), the obstruction position being configured to prevent insertion of another rope (4) in the securing area (5),
• a second clamp (10) configured to allow movement of the rope (4) from the insertion slot (3) to the securing area (5) and to prevent movement of the rope (4) from the securing area (5) to the insertion slot (3), the first clamp (6) being distinct from the second clamp (10), the second clamp (10) being a movable clamp configured to move between a standby position closing the securing area (5) and an insertion position of the rope (4) in the securing area (5),
**characterized in that** the first clamp (6) comprises a first gate (7) separating the insertion slot (3) and the securing area (5) so that the rope (4) drives the first gate (7) from a standby position to a securing position when the rope (4) moves from the insertion slot (3) to the securing area (5).

2. Carabiner (1) according to claim 1, comprising a first spring (9) configured to place the first clamp (6) in the standby position when there is no rope (4) in the securing area (5).

3. Carabiner (1) according to one of claims 1 and 2, wherein the first clamp (6) comprises a obstacle (8) integral to the first gate (7) and fitted in movable manner so that movement of the first gate (7) to the securing area (5) results in the insertion slot (3) being obstructed by the obstacle (8).

4. Carabiner (1) according to anyone of the preceding claims, wherein the first clamp (6) is fitted movable in rotation.

5. Carabiner (1) according to anyone of the preceding claims, comprising a second spring (11) configured to place the second clamp (10) in the standby position.

6. Carabiner (1) according to the preceding claim, wherein the second clamp (10) is configured to obstruct the insertion slot (3) when the second clamp (10) is in the insertion position of the rope (4) in the securing area (5).

7. Carabiner (1) according to the preceding claim, wherein the second clamp (10) comprises a second movable gate (12) separating the insertion slot (3) and the securing area (5) so that the rope (4) moves the second gate (12) from a standby position to the insertion position when the rope (4) moves from the insertion slot (3) to the securing area (5).

8. Carabiner (1) according to the preceding claim, wherein the second clamp (10) comprises a second obstacle (13) integral to the second gate (12) and fitted in movable manner so that movement of the second gate (12) to the securing area (5) results in the insertion slot (3) being obstructed by the second obstacle (13).

9. Carabiner (1) according to anyone of the preceding claims, wherein the first clamp (6) and the second clamp (10) are fitted movable in rotation around a same axis of rotation (X).
